(19)

Europäisches
Patentamt
European
Patent Office
Office européen
des brevets

(11) **EP 2 285 040 A1**

(12) **EUROPEAN PATENT APPLICATION**
published in accordance with Art. 153(4) EPC

| | |
|---|---|
| (43) Date of publication:<br>**16.02.2011 Bulletin 2011/07** | (51) Int Cl.:<br>***H04L 9/32*** (2006.01) |
| (21) Application number: **09753431.7** | (86) International application number:<br>**PCT/CN2009/000600** |
| (22) Date of filing: **27.05.2009** | (87) International publication number:<br>**WO 2009/143713 (03.12.2009 Gazette 2009/49)** |

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(30) Priority: **28.05.2008   CN 200810113494**<br><br>(71) Applicant: **Beijing E-hengxin Authentication Science &**<br>**Technology Co. Ltd.**<br>**Shijingshan District, Beijing 100042 (CN)** | (72) Inventors:<br> • **CHEN, Huaping**<br>  **ShinJingShan District**<br>  **Beijing 100042 (CN)**<br> • **NAN, Xianghao**<br>  **ShinJingShan District**<br>  **Beijing 100042 (CN)**<br><br>(74) Representative: **Wächter, Jochen et al**<br>**Kroher-Strobel**<br>**Rechts- und Patentanwälte**<br>**Bavariaring 20**<br>**80336 München (DE)** |

(54)    **TWO-FACTOR COMBINED PUBLIC KEY GENERATION AND AUTHENTICATION METHOD**

(57)    The present invention provides a two-factor combined public key system and authentication method combined by identity key and random key. The identity key is generated by using the number sequence generated from the user identity to select and combine the seed key set; and the random key is generated based on one-way function principle relied by common public key crypto-system. Multiple combination modes of the random key and identity key not only satisfy the requirement of centralized management, but also provide the user with exclusive right to the private key. The authentication system based on this key generation method has advantages that identity authentication does not need a third party certificate proof and the random private key of the common public key crypto-system is highly randomized and private. The system can be widely used in authentication of various scale (especially super-large scale) open systems, including fields such as trusted connecting, trusted loading, e-bank, trusted transaction, and trusted logistics and the like.

FIG. 1

**Description**

**Field of Invention**

The present invention relates to public key crypto-system and authentication field. Especially, the present invention relates to public key crypto-system and authentication system that is combined by identity key and random key, uses two public keys composed of identity and random public key as exterior public key, and has multiple public/private key pairs and a plurality of combined structures.

**Background of the Invention**

Since the birth of public key cryptosystem, there have been two types of authentication systems: one is certificate-based authentication system, and the other one is identity-based authentication system.
1) Certificate-based authentication system
In the conventional public key crypto-system, the relationship between public key and private key is:
Public key = F (Private key)
F is an one-way function. It is easy to calculate the public key from the user key (i.e., private key). However, it is a puzzle to calculate the private key from the public key. The bonding of public key and user identity needs proof by the certificate issued by the key management authority. The certificate authentication system needs calculation of many sections such as certificate issuance, verification, abolition, updating, and support and consumption of communication resources, and thus it is hard to match the large-scale network demand (e.g., the network with entity number of $10^9$).
2) Identity-based authentication system
Identity-based authentication system uses a user identity as a public key or generates a public key with a user identity, to integrate the identity with the public key; while the private key is generated by the key management authority who uses its controlled master key with the user identity as an independent variable. In the identity-based public key crypto-system, the relationship between the public key and the private key is:
Private key = F (master key, user identity)
In the identity-based public key crypto-system, the user identity integral with the public key is an independent variable in the functional relation. Under the control of the master key of the key management center, upon the user identity is given, the private key is uniquely determined. It is a puzzle for an attacker who has no control of the master key to try to obtain the private key from the user identity (public key). In 1999, NAN, Xianghao, a Chinese scholar proposed an identity-based combined public key system (called CPK), in which a method of selecting and combining elements of seed key matrix is used to generate an identity-based key. This is a new member of the identity-based public key crypto-system family.
In a typical identity-based public key crypto-system, entity private keys are all generated by the key management center based on identities and the master key. The entity does not have absolute private right or privacy. However, in an identity-based combined public key system, the private key is not a linear sum of the seed private keys, and theoretically there is a possibility for the private key to be collusively attacked, so as to affect the security of the system and application of scalability.

**Summary of the Invention**

The present invention provides a two-factor combined public key system and authentication system combined by identity key and random key. The identity key is generated by selecting and combining a seed key set with a number-sequence generated from a user identity. The random key is generated based on one-way function principle relied by typical public key crypto-system. The exterior public key adopts two-public-key form of identity plus random public key, and the interior key has a number of various combined structures of multiple key pairs, each of which belongs to multiple combined modes of multiple key pairs of random key and identity key. This not only can satisfy the demand of centralized management, but also can entrust the user with absolute privacy to the private key. The authentication system based on this key generation method has the advantages that identity authentication does not need a third party certificate proof and the random private key of the typical public key crypto-system is highly randomized and private. The system can be widely used in authentication of various scale (especially super-large scale) open systems, to satisfy the authentication demand in the fields including trusted connecting, trusted loading, e-bank, trusted transaction, and trusted logistics.
According to the present invention, the functional relation between the public key and the private key in the identity key is the public key/private key relationship of the identity-based pubic key crypto-system:

Private key = F (seed private key set, user identity)

The relation between public key and private key in self-defined random key follows the functional relation of conventional public key crypto-system:

Public key = F (private key)

Thus, the key of two-factor public key crypto-system combines two types of public key/private key relation of identity-based public key crypto-system and conventional public key crypto-system, and is a new public key crypto-system characterized by dual exterior public keys and multiple interior key pairs and their combined modes after the certificate-based authentication system and identity-based authentication system. The two-factor public key crypto-system keeps the respective advantages of the two public key crypto-systems, and overcomes the respective disadvantages of the two.

According to the present invention, the key management center registers and approves the identities and generates the seed key set, and publishes the seed public key set for individual entity to calculate the identity public key. The calculation process of the identity public key provides integrity proof for the identity and identity public key. Thus, there is no need for proof of third party certificate.

According to the present invention, the key management center can bond and publish the entity identity and the random public key defined by the center (i.e., first-order random public key) for using by the encrypting party or verifier.

According to the present invention, the individual entity is allowed to self-define the random key and add the random public key ($RaPK_{(USER)}$) to the random public key defined by the key management center, to generate a second-order random public key which is published for using by encrypting party or verifier.

According to the present invention, individual entity is allowed to conduct real time self-definition of new random key to update the random key and add the new random public key ($RaPK'_{(USER)}$) to the $(n-1)_{th}$-order ($n \geqq 3$) random public key, to generate a $n_{th}$-order random public key, which is published for using by encrypting party or verifier.

According to a preferred embodiment of the present invention, when performing digital signature, the random public key shall be sent to the verifier as a part of the signature code.

According to a preferred embodiment of the present invention, the verifier and encrypting party first uses the other party's identity and the published seed public key set to calculate the identity public key (IdPK), and adds it to the random public key (RaPK) published or provided by the signer to calculate the public key (PK).

According to the present invention, a two-factor combined public key generation and authentication method is provided, comprising the following steps:

Step 1: generating an identity key including an identity public key and an identity private key;

Step 2: generating a random key including a random public key and a random private key;

Step 3: the key management center (KMC) combining the identity key and the self-defined random key to generate a first-order two-factor key;

Step 4: the user combining the first-order two-factor key and the self-defined random key to generate a second-order two-factor key;

Step 5: the user combining the $(n-1)_{th}$-order two-factor key ($n \geqq 3$) and the self-defined updating random key to generate a $n_{th}$-order two-factor key;

Step 6: the verifier or encrypting party, by combining the identity public key calculated from the other party's identity and the random public key provided in the other party's signature or published by the management center, to obtain the user's public key.

According to a preferred embodiment of the present invention, Step 1 includes:

a) the key management center checks and approves the identity submitted by a user, to ensure its authenticity and uniqueness;

b) the key management center defines and generates seed private key set (seedSK) and seed public key set (seedPK) corresponding to each other;

c) the user identity is used as input of a hash function, to calculate hash value H (ID) of the identity;

d) the key management center constructs and selects number sequence with the H (ID), selecting from the seed private key set and generating a user identity private key (IdSK) with combination operation;

e) the encrypting party or verifier constructs and selects number sequence with the H (ID), selecting from the seed public key set and generating a user identity public key (IdPK) with combination operation.

According to a preferred embodiment of the present invention, in Step b), the seed key set (seedSK and seedPK) can be constructed in the different form of matrix, sequence, etc.

According to a preferred embodiment of the present invention, the construction form and scale of the seed key set is determined based on the actual needs of the system.

According to a preferred embodiment of the present invention, the seed public key set is published to the public, and the seed private key set is kept by the center in confidential.

According to a preferred embodiment of the present invention, Step 2 includes:

f) the key management center uses a random number generator to randomly generate a positive integer of modulo n as a random private key (RaSK $_{(KMC)}$) defined by the center, and generates a random public key (RaPK $_{(KMC)}$) defined by the center through scalar multiplication operation of elliptic curve group.

g) the user uses the random number generator to generate a positive integer of modulo n as a random private key (RaSK $_{(USER)}$) self-defined by the user, and generates a random public key (RaPK $_{(USER)}$) self-defined by the user through scalar multiplication operation of elliptic curve group.

According to a preferred embodiment of the present invention, Step 3 includes:

h) the key management center adds the user identity private key (IdSK) with the random private key (RaSK $_{(KMC)}$) randomly generated by the center, to generate a first-order private key (SK $_1$);

i) the key management center writes SK $_1$ and RaPK $_{(KMC)}$ into a chip to provide to the user who owns the identity;

j) the identity and random public key RaPK $_{(KMC)}$ are sent out by the user or published by the key management center;

k) the encrypting party or verifier uses the user identity to generate an identity public key (IdPK), and adds it with RaPK $_{(KMC)}$ being published or sent, to generate a first-order public key (PK $_1$).

According to a preferred embodiment of the present invention, Step 4 includes:

1) the user uses a random number generator to generate RaSK $_{(USER)}$, and generates RaPK $_{(USER)}$ through scalar multiplication operation of elliptic curve group;

m) the user adds SK $_1$ with RaSK $_{(USER)}$ to generate a second-order private key (SK $_2$);

n) the user adds RaPK $_{(USER)}$ with RaPK $_{(KMC)}$ to generate a second-order random public key (R $_a$PK $_2$);

o) the user writes SK $_2$ and R $_a$PK $_2$ into a chip, and deletes SK $_1$ and RaPK $_{(KMC)}$;

p) the identity and R $_a$PK $_2$ are sent out by the user or published by the key management center;

q) The encrypting party or verifier generates IdPK by using the user identity, and adds it with R $_a$PK $_2$ being published/sent out, to obtain a second-order public key (PK $_2$).

According to a preferred embodiment of the present invention, Step 5 includes:

r) the user using a (n-1) $_{th}$-order combined key as an initial state, to generate n $_{th}$-order combined key, wherein n $\geq$ 3;

s) When updating the key pair, the user using a random number generator to generate RaSK $_{(USER)}$, and generating RaPK $_{(USER)}$ through scalar multiplication operation of elliptic curve group;

t) adding (n-1) $_{th}$-order private key (SK $_{n-1}$) stored in the original chip with RASK $_{(USER)}$ newly defined, to generate n $_{th}$-order private key (SK $_n$);

u) accumulating (n-1) $_{th}$-order random public key (RaPK $_{n-1}$) stored in the original chip and R $_a$SK $_{(USER)}$ newly defined, to obtain n $_{th}$-order random public key (RaPK $_n$);

v) the user writing SK $_n$ and RaPK $_n$ into a chip, and deleting SK $_{n-1}$ and RaPK $_{n-1}$;

w) the identity and random public key (RaPK $_n$) are sent out by the user or published by the key management center, including that the user provides the identity and random key to verifier through digital signature, and the user submits the identity and random key to the key management center for publication.

According to a preferred embodiment of the present invention, Step 6 includes:

x) the encrypting party or verifier using the other party's user identity and the published seed public key set to calculate identity public key (IdPK) of the user;

y) adding the identity public key (IdPK) of the user with the random public key (RaPK) being sent or published, to obtain a public key (PK) of the user.

According to a preferred embodiment of the present invention, the two-factor combined key is composed of combining multiple public key/private key pair that respectively belongs to identity key and random key.

According to a preferred embodiment of the present invention, the key defined by the key management center is a first-order two-factor key; and the key that adds the user defined random key on the basis of the first-order or (n-1) $_{th}$-order two-factor key is a second-order or n $_{th}$-order (n $\geq$ 3) two-factor key.

According to a preferred embodiment of the present invention, the first-order public key (PK $_1$) = IdPK+ RaPK $_{(KMC)}$ = IdPK+ RaPK $_1$, wherein RaPK $_1$ indicates that the random public key is only constructed by one random public key;

The second-order public key (PK $_2$) = IdPK+ RaPK $_{(KMC)}$+ RaPK $_{(USER)}$ = IdPK+ RaPK $_2$, wherein RaPK $_2$ indicates that the random public key is constructed by adding up two random public keys;

The n $_{th}$-order public key (PK $_n$) = IdPK+ RaPK $_n$, wherein n $\geq$ 3, RaPK $_n$ indicates that the random public key is constructed by adding up n random public keys;

According to a preferred embodiment of the present invention, the user is allowed to change the self-defined random public/private key pair at any time as desired, and to generate new public/private key pair.

According to a preferred embodiment of the present invention, the user adds the self-defined random private key with the combined private key stored in the chip, to obtain a combined private key of that order; and adds the self-defined random public key with the random public key stored in the chip, to obtain a random public key of that order; in which the chip shall include the user identity (ID), the private key of that order and the random public key of that order therein.

According to a preferred embodiment of the present invention, when using private key ($SK_1$, $SK_2$, or $SK_n$) to sign, the random public key ($RaPK_{(KMC)}$, $RaPK_2$ or $RaPK_n$) is also sent to the relying party as a part of the signature code.

According to a preferred embodiment of the present invention, when verifying the signature, the verifier first uses the published user identity and seed public key set to calculate identity public key (IdPK), and adds it with the random public key RaPK published or sent by the signer, to calculate the other party's public key (PK), for verifying authenticity of the signature.

In view of above, the present invention has the following advantages:

1) The present invention uses the identity and random public key as exterior public key, and the interior key uses multiple public/private key pairs that respectively belong to identity key and random key. The multi-level overlaying structure of multiple combination modes applies to various authentication needs of various scale network systems.

2) The authentication system constructed according to the present invention uses the identity key as a component part of the combined key, and thus bonding of the user identity and public/private key pairs does not need the third party certificate proof. The system can support ultra-large scale public network authentication, is simple in structure, and is convenient and economic for management, maintenance and running.

3) Encryption of the self-defined random private key to the identity private key can not only make the possibility of generating huge number of useful keys with small amount of seed keys combination under secure condition to become true, but also can be independent of the seed key set scale to maximize the key space, so that the system becomes an actual means to solve the authentication puzzle under large scale network circumstance.

4) In the present invention, the user self-defined random key allows the user to have absolute privacy to the private key. Except for the user, anyone including the key management center cannot infringe the user's privacy.

5) The self-defined random key gives the key structure great flexibility, which can be used by KMC to generate $RaSK_{(KMC)}$ to construct a first-order private key and random public key; which can be used by the user to generate $RaSK_{(USER)}$ to construct a second-order private key and random public key; and which can be used by the user to repeatedly generate $RaSK'_{(USER)}$ to construct higher-order private key and random public key. Different application circumstances can choose different application modes of self-defined random key.

6) With the self-defined random key, the key can be completely randomized, and the useful key space can be maximized, which provides a scientific calculation possibility for key collision probability, so as to provide reliable basis for determining user scale.

The objects and other advantages of the present invention can be realized and obtained with the specific structures in the following specification, claims, and drawings.

**Brief Description of the Drawings**

In order to make the objects, technical solutions and advantages of the present invention more clear, detailed description in connection with the drawings will be made to the present invention, in which:

$\sum$ ++ ++ represents elliptic curve point operation;

$\sum$ + + represents modulo-n integer operation;

.G represents scalar multiplication of elliptic curve group;

represents confidential part;

represents public part;

Fig. 1 shows a first-order two-factor private key and random public key generation mode according to the present invention;

Fig. 2 shows a second-order two-factor private key and random public key generation mode according to the present invention;

Fig. 3 shows a higher-order two-factor private key and random public key generation mode according to the present invention;

Fig. 4 is a schematic view of generating public key based on identity and random public key according to the present invention;

Fig. 5 is a functional block diagram of the key management center according to the present invention;

Fig. 6 is a functional diagram of the authentication chip according to the present invention;

Fig. 7 shows a generation process of the anti-forgery electronic tag according to the present invention; and

Fig. 8 shows a verification process of the anti-forgery electronic tag according to the present invention.

## Detailed Description of the Preferred Embodiment

The two-factor combined public key system (TF-CPK) of the present invention uses identity plus random public key as the exterior public key, while the interior adopts multi-level overlaying key structure of the public/private key pairs with two types of keys (identity key and random key) and the multiple combination modes. The system involves: basis of cryptography, rule of key combination, random number, identity, hashing function, seed key, etc.. This invention uses elliptic curve crypto-system (ECC) as the basis of the system construction. Below is detailed description to the principle of key generation method and implementation according to the present invention. It shall be noted that the embodiments of the two-factor combined public key technology and identity authentication system of the present invention are only for examples, and the present invention shall not be limited to the embodiments.

1. Several elements of two-factor combined public key crypto-system

The elements of this crypto-system includes: elliptic curve group, point multiplication and discrete logarithm, rule of key combination, random number generator, user identity, hashing function, seed key, etc.

1.1 Elliptic curve group

The discrete logarithm puzzle of elliptic curve is the mathematical basis of the security of this crypto-system. The selected elliptic curve group is defined in quintuple (a, b, G, n, p):

p: is a big prime number, and the elliptic curve is established on a finite field of mod P;

a, b: defining cubic equation $y^2 = x^3 + ax + b$ (mod P);

G: is a basic point, all the point multiplication of which constitute the elliptic curve group;

n: is a big prime number, and is an order of the elliptic curve group generated by the basic point G;

1.2 Point multiplication and discrete logarithm

(a, b, G, n, p) is the solution of cubic equation defined by a and b, and an additive group composed of points of infinity. The elements in the group are integer pair (x, y) that satisfies the equation $y^2 = x^3 + ax + b$ (mod P) and a point of infinity (marked as O).

The additive operation rule of elements P and Q of the additive group is:

1)

$$P + O = P;$$

2) If point P=(x, y), Q=(x, -y), then P+Q=O.

3) If P=($x_1$, $y_1$), Q=($x_2$, $y_2$), and P≠-Q, then the value calculation rule of P+Q=($x_3$, $y_3$) is:

$$x_3 \equiv \lambda^2 - x_1 - x_2 \bmod p$$

$$y_3 \equiv \lambda (x_1 - x_3) - y_1 \bmod p$$

dans la formule mettre un 3 en indice après y

wherein:

$$\lambda = \begin{cases} \dfrac{y_2 - y_1}{x_2 - x_1} & \text{if } P \neq Q \\[2ex] \dfrac{3x_1^2 + a}{2y_1} & \text{if } P = Q \end{cases}$$

The addition of P≠Q is called point addition operation; and the operation of P=Q is called point multiplication operation.

The point of $n_a$ times G is marked as $n_a.G$. G generates elements $n_a.G$ ($n_a$=1, 2, •••, n) in the additive group with point multiplication operation and point additive operation. $n_a$ is the discrete logarithm of $n_a.G$. Given $n_a$ and G to obtain $n_a.G$ is called scalar multiplication, which is easy to calculate. However, with G and $n_a.G$ to obtain $n_a$ is a discrete logarithm puzzle of elliptic curve. In the elliptic curve crypto-system, ($n_a.G$, $n_a$) constitutes public key and private key pair, i.e., in which point multiplication $n_a.G$ is the public key, and discrete logarithm $n_a$ is the private key.

1.3 Rule of key combination

Rule of key combination of the elliptic curve crypto-system is an important cryptographic property of the elliptic curve group.

Rule of key combination: if ($n_1.G$, $n_1$) and ($n_2.G$, $n_2$) are two sets of public key/private key pairs, then the sum of their public keys

$$n_3.G = n_1.G + n_2.G \quad \text{(elliptic curve group operation)}$$

and the sum of their private keys

$$n_3 = n_1 + n_2 \quad \text{(mod n integer addition)}$$

constitute combined public key/private key pair ($n_3.G$, $n_3$).

The more common expression of rule of key combination is: if ($n_1.G$, $n_1$), ($n_2.G$, $n_2$), •••, ($n_t.G$, $n_t$) are public key/private key pairs of the elliptic curve, then the sum of their public keys

$$P = n_1.G + n_2.G + \cdots + n_t.G \text{ (elliptic curve group operation)}$$

and the sum of their private keys

$$S = n_1 + n_2 + \cdots + n_t \text{ (mod n integer addition)}$$

constitute combined public key/private key pair (P, S).

1.4 random number generator

The private key in the self-defined random key pair is a random number RN. RN is generated by a random number generator RNG, to avoid the negative impact resulted from habits and inertia. The random number generated by the random number generator shall be properly selected (e.g., the random number shall not have very small value), so as to apply to the key. The key management center generates different random numbers through the RNG as the random keys for encrypting the identity private key; and the user generates self-defined random keys through the RNG to exclusively own the private key and update the private key at any time.

1.5 user identity

User identity (ID) is constituted of exclusive properties such as name, address of an entity. The user identity shall be registered and approved by the key management center (KMC), to have authenticity and uniqueness.

Hashing function

Hashing function recommended by the international standard is adopted. It uses the user identity with various lengths as the input, to output equal length of bit strings, for generating selected number sequence.

Assuming that the selected number sequence is constructed of u-bit binary numbers with the number of v, then the output length of the hashing function is defined as v×u, i.e., H (ID)=($a_0$, $a_1$, ••• $a_{vu-1}$).

The output number sequence is: $w_0$, $w_1$, •••, $W_{v-1}$

$$w_i = a_{iu} \times 2^{u-1} + a_{iu+1} \times 2^{u-2} + a_{iu+2} \times 2^{u-3} + \ldots + a_{iu+u-1} \times 2^0, \quad i=0,1,\ldots,v-1$$

The simplified form of the above formula is

$$w_i = \sum_{j=0}^{u-1} a_{ux+j} \times 2^{(u-1)-j}$$ (binary system is converted to decimal system, i=0, 1, $\cdots$, v-1).

1.7 Seed key sequence

$2^u \times v$ key pairs $(P_0, S_0)$, $(P_1, S_1)$, $\cdots$, $(P_{2^u \times v-1}, S_{2^u \times v-1})$ are selected from the keys pace, to construct a seed key set, including a seed public key set $(P_0, P_1, \cdots, P_{2^u \times v-1})$ and a seed private key set $(So, S_1, \cdots, S_{2^u \times v-1})$.

2. Key construction of the two-factor combined public key crypto-system

The keys include:

self-defined random key pair $(R_aPK, P_aSK)$;

identity key pair (IdPK, IdSK);

seed key pair (P, S);

combined key pair (PK, SK).

2.1 Self-defined random key

The self-defined random key is a public key/private key pair $(R_aPK, P_aSK)$ composed of random public key $R_aPK$ and random private key $P_aSK$.

The random private key is a random number RN generated by the random number generator, i.e. $P_aSK$=RN.

The random public key is obtained from scalar multiplication operation with RN as the multiples of the basic point, i.e., $R_aPK$=RN.G (scalar multiplication of elliptic curve group).

The self-defined random key comprises $(R_aPK_{(KMC)}, P_aSK_{(KMC)})$ generated by the key management center (KMC) and $(R_aPK_{(USER)}, P_aSK_{(USER)})$ generated by the user (USER).

$$R_aPK_{(KMC)} = RN_{(KMC)} \cdot G \quad \text{(scalar multiplication of elliptic curve group)}$$

$$R_aSK_{(KMC)} = RN_{(KMC)}$$

$$RN_{(KMC)} \text{ is a random number generated by KMC with the help of RNG}$$

$$R_aPK_{(USER)} = RN_{(USER)} \cdot G \text{ (scalar multiplication of elliptic curve group)}$$

$$R_aSK_{(USER)} = RN_{(USER)}$$

$RN_{(USER)}$ is a random number generated by USER with the help of RNG

2.2 Identity key

Identity key is a public key/private key pair (IdPK, IdSK) composed of identity public key (IdPK) and identity private key (IdSK).

The output of the hashing function that uses the identity as the input

$$H(ID) = (w_0, w_1, \cdots, w_{v-1})$$

c is selected to be a positive integer $(0<c<2^u)$, then the selected bit $(sw_i)$ is calculated with the following formula:

$$sw_0 = c + w_0$$

$$sw_1 = c + w_1 + sw_0$$

......

$$sw_i = c + w_i + \sum_{j=0}^{i-1} sw_j \pmod{2^N \times v}, \quad i = 1, 2, \ldots, v - 1$$

The calculation formula of the identity public key/private key pair is:

$$IdPK = \sum_{j=0}^{r-1} P_{sw_j} \quad \text{(point operation of elliptic curve group)}$$

$$IdSK = \sum_{j=0}^{r-1} S_{sw_j} \quad \text{(mod n integer additive operation)}$$

3. Multiple key combination modes of the two-factor combined public key crypto-system

3.1 First-order two-factor key mode

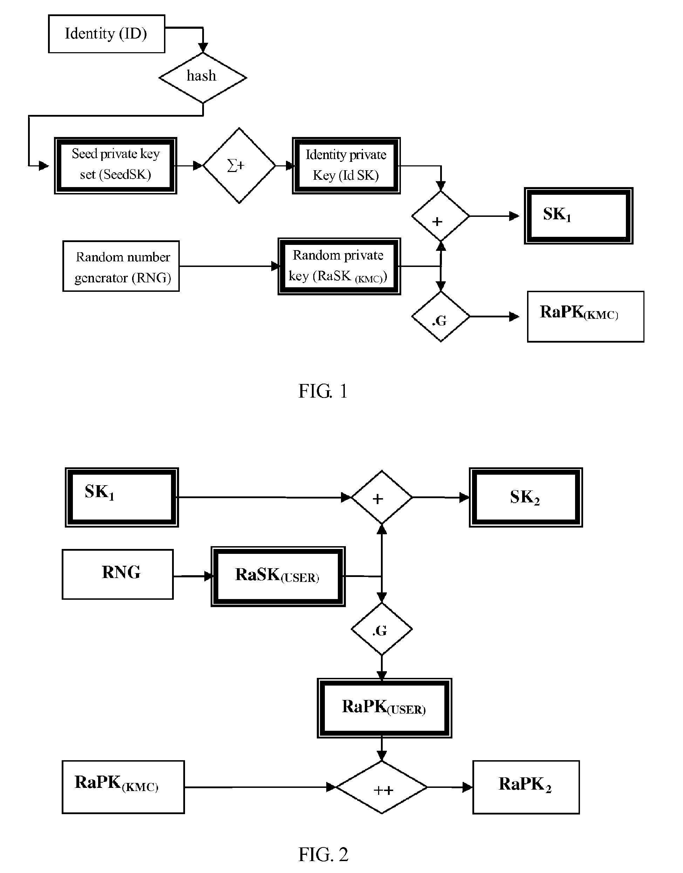

Attention is directed to Fig. 1, which shows a first-order two-factor key mode according to the present invention.

In the first-order two-factor key mode, the user key is completely generated by the key management center (KMC). This mode applies for closed systems of any scale, in which the users absolutely trust the key management center. In addition, the first-order two-factor key is the basis to generate a second-order or $n_{th}$-order two-factor key. Its workflow includes:

① defining and generating seed private key set (seedSK) and seed public key set (seedPK) that correspond to each other;

② checking and approving the identity submitted by the user to ensure its authenticity and uniqueness;

③ using the user identity as the input of the hash function, to calculate the hash value H (ID) of the identity;

④ using H (ID) to construct selected number sequence, selecting from the seed private key set and generating the user identity private key (IdSK) through combination operation;

⑤ using the random number generator to generate the random key $R_aSK_{(KMC)}$ and $R_aPK_{(KMC)}$ defined by the center;

⑥ adding IdSK and $R_aSK_{(KMC)}$ to obtain the first-order two-factor private key $SK_1$;

⑦ writing ($SK_1 \mid R_aPK_{(KMC)}$) into a chip to provide to the user.

3.2 Second-order two-factor key mode

Attention is directed to Fig. 2, which shows a second-order two-factor key mode according to the present invention.

The Second-order two-factor key mode, based on the first-order two-factor key mode, adds user self-defined random key. This mode mainly applies for open systems of any scales (including large scale and super-large scale), in which the users require private right to the private keys that is not controlled by the key management center. The generating process includes:

① The user using a random number generator to generate a user self-defined random private key $R_aSK_{(USER)}$, and generate a user self-defined random public key $R_aPK_{(USER)}$ through scalar multiplication operation of elliptic curve group;

② The user adding $R_aSK_{(USER)}$ with $SK_1$ to generate a second-order two-factor private key ($SK_2$);

③ The user adding $R_aSK_{(USER)}$ with $R_aPK_{(KMC)}$ to generate a second-order random public key ($R_aPK_2$);

④ The user writing the $SK_2$ and $R_aPK_2$ into a chip, and deleting $SK_1$ and $R_aPK_{(KMC)}$.

3.3 $n_{th}$-order two-factor key mode

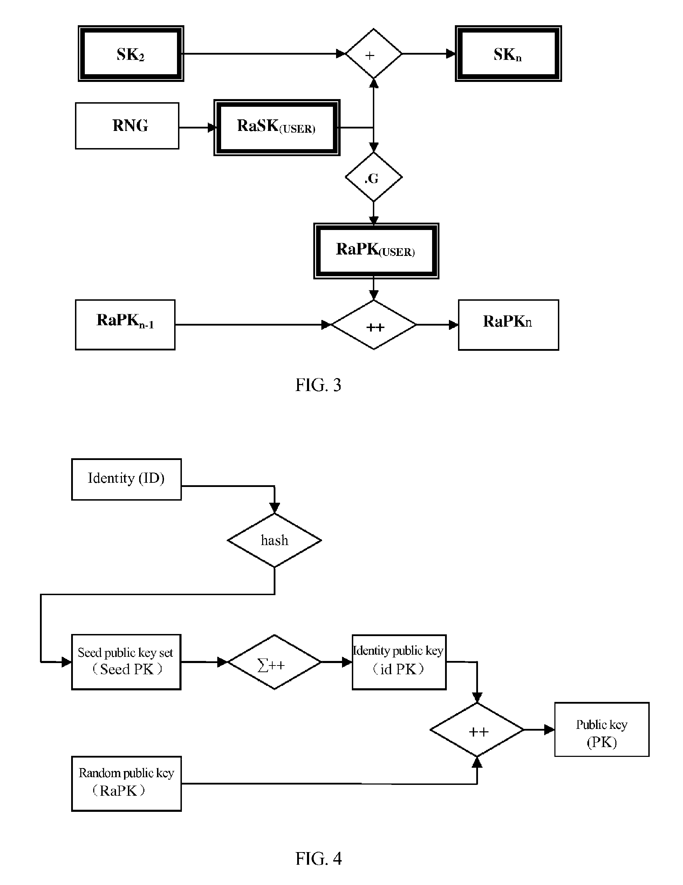

Attention is directed to Fig. 3, which shows a $n_{th}$-order two-factor key mode according to the present invention.

The $n_{th}$-order two-factor key mode mainly applies for systems in which the users require to have self-updating right to the private keys at any time. The generating process is as follows:

① The user using a random number generator to generator a user self-defined random private key $R_aSK_{(USER)}$ and generate a user self-defined random public key $R_aSK_{(USER)}$ through scalar multiplication operation of elliptic curve group;

② The user adding SK$_2$ with the newly generated R$_a$SK$_{(USER)}$ to generate a n$_{th}$-order two-factor private key (SK$_n$);

③ The user adding the newly generated R$_a$SK$_{(USER)}$ with R$_a$PK$_2$ to generate a n$_{th}$-order random public key (R$_a$PK$_n$);

④ The user writing SK$_n$ and R$_a$PK$_n$ into a chip, and deleting SK$_2$ and R$_a$PK$_2$.

The above process can be repeatedly performed. In addition, the user updating key can also be implemented by repeatedly using the second-order two-factor key mode. When using the second-order two-factor key mode to implement key updating, initial status of the process shall always be the first-order two-factor private key and center-defined random public key (SK$_1$ ∥ R$_a$PK$_{(KMC)}$).

3.4 Conversion from two-public-key to public key

The verifier or encryptor needs to know the public key actually used by the other party. Thus, conversion from identity and random public keys to public key is needed. The conversion process is as follows:

① The verifier or encryptor first needs to obtain the user identity ID and its corresponding random public key (R$_a$PK) sent by the signer or published by the key management center;

② The user identity ID is used as the input of hash function, to calculate the hash value H(ID) of the identity;

③ The H(ID) is used to construct the selected number sequence, selecting from the seed private key set and generating the user identity public key (IdPK) through combination operation;

④ IdPK is added with R$_a$PK, to obtain the public key (PK) used by the user. Attention is directed to Fig. 4, which shows a flow chart of generating public key based on identity and random public key according to the present invention.

4. Digital signature algorithm

The digital signature algorithm adopts ECDSA algorithm recommended by the international standard.

4.1 Public parameters and algorithm

① Five-parameter group (a, b, G, n, p) of elliptic curve group;

② hash function h to the message;

③ Seed public key set(P$_0$, P$_1$, •••, P$_{2^u \times v-1}$);

④ The identity ID and random public key R$_a$PK sent by signer A

4.2 Signing process of A to message m

① Randomly selecting k∈Zn

② Calculating: k.G=(x, y) (scalar multiplication of elliptic curve group)

③ Calculating: r=x mod n

④ Calculating: S=k$^{-1}$ (h(m) + SK. r) mod n

⑤ A sends m and signature (r, s) to B

4.3 Signature verification process of B to A

① generating identity public key IdPK with A's identity via seed public key set

② Calculating: PK=IdPK + R$_a$PK (point operation of elliptic curve);

③ Calculating: u$_1$=h(m).S$^{-1}$ mod n

$$u_2 = r.S^{-1} \bmod n$$

④ Calculating: R=u$_1$.G+u$_2$.PK (point operation of elliptic curve) Represented by R=(x', y');

⑤ Calculating: v=x' mod n; if v=r, then the verification is passed, and the signature is valid. Otherwise, the signature is invalid.

5. Key transfer algorithm for data encryption

The key for data encryption is called session key. The session key shall be updated at each communication.

5.1 Public parameters

① Five-parameter group (a, b, G, n, p) of elliptic curve group

② Seed public key set(P$_0$, P$_1$, •••, P$_{2^u \times v-1}$)

③ The identity ID and random public key R$_a$PK$_B$ of the receiver B

5.2 Key transmission of sender A

① using the identity ID of receiver B with the seed public key set to generate identity public key IdPK$_B$ of party B

② calculating public key of party B

$$PK_B = IdPK_B + R_aPK_B \quad \text{(point operation of elliptic curve);}$$

③ randomly selecting k ∈ Zn

④ calculating: k.G=(x, y) (scalar multiplication)

⑤ selecting r=x (mod n) as a session key

⑥ calculating k.PK$_B$

⑦ sending k.PK$_B$ to B

5.3 Process of receiver B obtaining session key

① receiving k.PK$_B$

② calculating: SK$_B$$^{-1}$.(k.PK$_B$)=k.G=(x, y)

③ selecting r=x (mod n) as a session key

6. Authentication system based on two-factor combined public key (TF-CPK) crypto-system

Authentication system of any scale (including ultra-large scale) can be constructed by using two-factor combined public key (TF-CPK) technology. In addition, terminal-to-terminal direct authentication can be realized. The authentication process does not need support of third party online database. The system is mainly composed of key management center and user terminal.

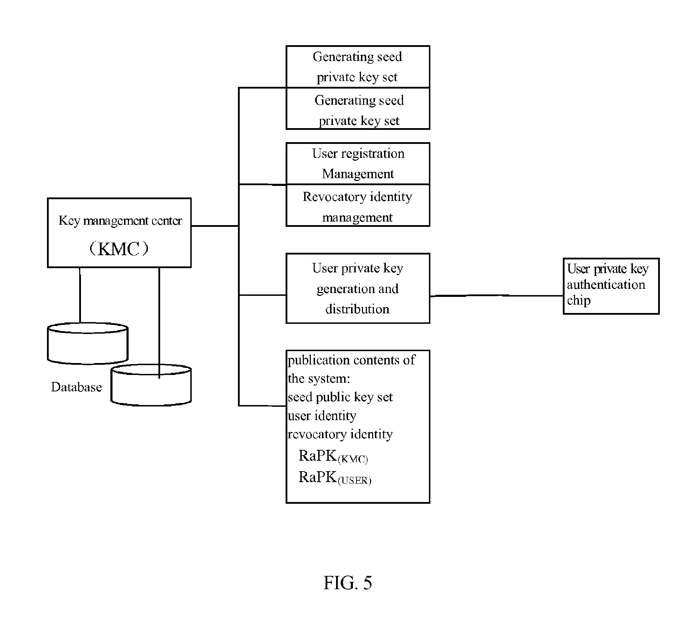

Fig. 5 shows KMC functional block diagram according to the present invention.

6.1 Key management center

The key management center mainly comprises:

① user-registration, responsible for checking and approving user identities, to ensure authenticity and uniqueness, in which the user identity can be defined based on name, unit/organization name, bank account, and phone number, etc.;

② seed key generation, responsible for generating seed key set (SeedSK, SeedPK);

③ user key generation and distribution, using the user identity, seed private key set and random number generator to generate first-order private key (SK$_1$) and center-defined random public key (R$_a$PK$_{(KMC)}$), and writing SK$_1$ and R$_a$PK$_{(KMC)}$ into a dedicated chip (which can be encapsulated into IC card, U-Key, etc.) to distribute to the users. The key generating process is in Fig 5.

6.1 First-order two-factor key mode

④ public data publication, the published contents including: seed public key set, revocatory identity list, and user identity and its corresponding R$_a$PK$_{(KMC)}$ and R$_a$PK$_{(USER)}$, etc.. The below table shows the user identity and data format of its corresponding random public key published by KMC.

| User | +RaPK$_{(KMC)}$ | first-order postfix |
|---|---|---|
| Identity | + R$_a$PK$_{(KMC)}$+ R$_a$PK$_{(USER)}$= R$_a$PK$_2$ | second-order postfix |
| ID | + R$_a$PK$_{n-1}$+ R$_a$PK$_{(USER)}$= R$_a$PK$_n$ | n$_{th}$-order postfix |

data format published by KMC

6.2 User terminal

The user terminal is mainly comprised of authentication chip (which can be encapsulated in forms easy to use, such as IC card, USB-Key, etc.) and client software. The authentication process of TF-CPK authentication system is mainly conducted between client and server (the function of which corresponds to that of the client), and between clients. The chip has calculation and storage unit, algorithm protocol and user private key and public key data embedded therein, corresponding to a complete authentication system (see the function diagram of the system). The private key, upon encrypted with the user *pin* code, is stored in the safe memory area of the chip. All the operations involving the private key, such as digital signature, key-exchange, are conducted in the chip, to ensure safety of the private key.

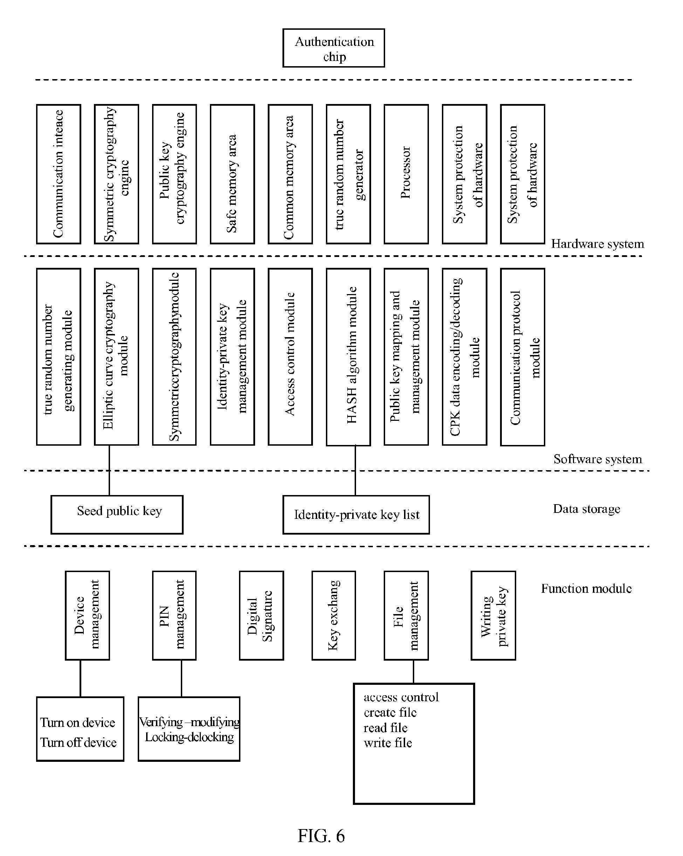

Attention is directed to Fig. 6, which shows a structure and function diagram of TF-CPK authentication chip according to the present invention.

7. Application Field

TF-CPK authentication system theoretically can be used in all the fields that require authenticity proof, such as: electronic seal, anti-forgery of electronic tag and the like. In addition, TF-CPK authentication system can publish user identity having random public key with the help of the center, to realize key exchange, such as encrypting the email, etc..

7.1 Electronic seal system

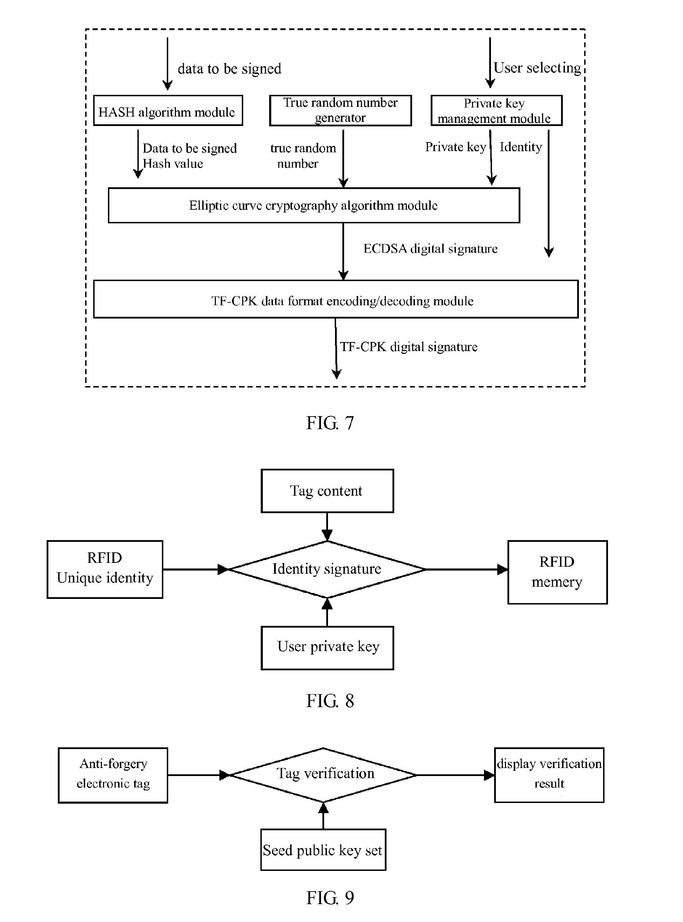

Attention is directed to Fig. 7, which shows an electronic seal system according to the present invention.

The electronic seal system proves authenticity of the transaction information with the digital signature, and is widely used in fields such as e-business, e-government. The workflow is as follows:

7.1.1 Signer A uses the private key in the authentication chip to sign on the original data m. The signing process is as follows:

① Randomly selecting $k \in Zn$

② Calculating: $k.G=(x, y)$ (scalar multiplication of elliptic curve group)

③ Calculating: $r=x \bmod n$

④ Calculating: $S=k^{-1} (h(m) + SK. r) \bmod n$

⑤ A sending m and signature (r, s) to B

7.1.2 Verifier B verifies the signature data of A. The verification process is as follows:

① using A's identity, with seed public key set, to generate identity public key IdPK;

② Calculating: $PK=IdPK + R_aPK$ (point operation of elliptic curve)

③ Calculating: $u_1=h(m).S^{-1} \bmod n$

$$u_2=r.S^{-1} \bmod n;$$

④ Calculating: $R=u_1.G+u_2.PK$ (point operation of elliptic curve) recorded as: $R=(x', y')$;

⑤ Calculating: $v=x' \bmod n$, if $v=r$, then verification is passed, and the signature is valid. Otherwise, the signature is invalid.

7.2 Anti-forgery of electronic tag

Anti-forgery of electronic tag is a novel anti-forgery technology having both physical and logical anti-counterfeiting features generated by combining TF-CPK digital signature technology and RFID technology. The technology can effectively prevent forgery and duplication, and has universal verification capability. The implementation process is as follows:

7.2.1 Manufacture of anti-forgery electronic tag

Fig. 8 shows a generation process of anti-forgery electronic tag according to the present invention.

① Reading a unique number on a RFID chip;

② Using TF-CPK algorithm and private key to perform digital signature to anti-forgery information, such as the holder's personal information, the certificate issuing unit or product information and manufacturer, along with the RFID unique number and a random public key corresponding to the private key (see 7.11 for signature algorithm), to generate a signature information;

③ Writing the signature information into the RFID chip;

7.2.2 Verification of anti-forgery electronic tag

Fig. 9 shows the verification process of anti-forgery electronic tag according to the present invention.

① Using TF-CPK algorithm to calculate an identity public key of the signer, and adding it to a random public key being sent, to obtain a useful public key of the signer;

② Using the public key to interpret the digital signature information on the anti-forgery chip (see 7.11 for algorithm);

③ It is true if the information can be properly displayed, otherwise it is false.

7.3 Safe email system

Email is the most widely used network information exchange means. Use of TF-CPK technology can conduct digital signature and encryption to the email contents, to effectively ensure authenticity, integrity and privacy of the information.

7.3.1 Digital signature and verification to email contents

The signer uses the private key to perform digital signature, and provides the user identity and random public key of his own in the signature;

The verifier uses the other party's identity, with the published seed public key set, to calculate the other party's identity public key; adds it with the random public key sent by the other party to obtain a useful public key of the other party; and verifies the signature contents with it.

7.3.2 Encryption/decryption of email contents

The sender A calculates the public key of the receiver B with the user identity and random public key postfix published by the center;

Randomly selecting $k \in Zn$

Calculating: $k.G=(x, y)$ (scalar multiplication);

Selecting $r=x \pmod n$ as a session key;

Calculating $k.PK_B$;

Sending $k.PK_B$ with the encrypted information to B;

The receiver B receiving the encrypted information having $k.PK_B$;

Calculating: $SK_B^{-1}.(k.PK_B)=k.G=(x, y)$;

Selecting $r=x \pmod n$ as the session key, to decrypt the encrypted information.

The above description is only for the preferred embodiments, and is not intended to limit the invention. Apparently, people skilled in the art can make various modifications and variations to the present invention without departing from the scope and spirit of the invention. Thus, if such modifications and variations fall into the scope of the appended claims or equivalent to those disclosed, they are intended to be included in the invention.

**Claims**

1. A two-factor combined public key generation and authentication method, comprising the following steps:

   step 1: generating an identity key including identity public key and identity private key;
   step 2: generating a random key including random public key and random private key;
   step 3: a key management center combining the identity key and a self-defined random key to generate a first-order two-factor key;
   step 4: a user combining the first-order two-factor key and a self-defined random key to generate a second-order two-factor key;
   step 5: the user combining a $(n-1)_{th}$-order two-factor key and a self-defined updating random key to generate a $n_{th}$-order two-factor key, in which $n \geqq 3$;
   step 6: a verifier or encryptor, by combining an identity public key calculated from an other party's identity and a random public key provided in the other party's signature or published by the key management center, to obtain the user's public key.

2. The method of claim 1, wherein step 1 comprises:

   a) the key management center checking and approving identity submitted by the user, to ensure the identity's authenticity and uniqueness;
   b) the key management center defining and generating a seed private key set seedSK and a seed public key set seedPK that correspond to each other;
   c) using the user identity as an input of a hash function, to calculate a hash value H (ID) of the identity;
   d) the key management center using H (ID) to construct a selected number sequence, selecting from the seed private key set and generating a user identity private key IdSK through combination operation;
   e) the encryptor or verifier using H (ID) to construct a selected number sequence, selecting from the seed public key set and generating a user identity public key IdPK through combination operation.

3. The method of claim 2, wherein in step b), the seed private key set and seed public key set (seedSK and seedPK) can be constructed in forms of matrix and sequence.

4. The method of claim 3, wherein the seed public key set is open to public, and the seed private key set is kept in confidential by the key management center.

5. The method of claim 1, wherein step 2 comprises:

   f) the key management center using a random number generator to randomly generate a mod n positive integer as a random private key $RaSK_{(KMC)}$ defined by the center, and using scalar multiplication operation of elliptic curve group to generate a center-defined random public key $RaPK_{(KMC)}$;
   g) the user using the random number generator to generate a mod n positive integer as a user self-defined random private key $RaSK_{(USER)}$, and using scalar multiplication operation of elliptic curve group to generate a user self-defined random public key $RaPK_{(USER)}$.

6. The method of claim 1, wherein step 3 comprises:

   h) the key management center adding a user identity private key IdSK with a random private key $RaSK_{(KMC)}$ randomly generated by the center, to generate a first-order private key $SK_1$;
   i) the key management center writing the first-order private key $SK_1$ and the random public key $RaPK_{(KMC)}$ into a chip, to provide to the user who owns the identity;
   j) the identity and random public key $RaPK_{(KMC)}$ being sent out by the user or published by the key management center;
   k) the encryptor or verifier using the user identity to generate an identity public key IdPK, and adding it with RaPK $_{(KMC)}$ being published or sent, to generate a first-order public key $PK_1$.

7. The method of claim 1, wherein step 4 comprises:

> 1) the user using a random number generator to generate RaSK $_{(USER)}$, and using scalar multiplication operation of elliptic curve group to generate RaPK $_{(USER)}$;
> m) the user adding $SK_1$ with RaSK $_{(USER)}$ to generate a second-order private key $SK_2$;
> n) the user adding RaPK $_{(USER)}$ and RaPK $_{(KMC)}$ to generate a second-order random public key $R_aPK_2$;
> o) the user writing $SK_2$ and $R_aPK_2$ into a chip, and deleting $SK_1$ and RaPK $_{(KMC)}$;
> p) the identity and $R_aPK_2$ being sent out by the user or published by the key management center;
> q) the encryptor or verifier using the user identity to generate IdPK, and adding it with $R_aPK_2$ being published and sent, to obtain a second-order public key $PK_2$.

8. The method of claim 1, wherein step 5 comprises:

> r) the user using $(n-1)_{th}$-order combined key as initial state, to generate $n_{th}$-order combined key, in which $n \geqq 3$;
> s) when updating key pair, the user using a random number generator to generate RaSK $_{(USER)}$, and using scalar multiplication of elliptic curve group to generate RaPK $_{(USER)}$;
> t) accumulating $(n-1)_{th}$-order private key $SK_{n-1}$ stored in an original chip with newly defined RaSK $_{(USER)}$, to generate $n_{th}$-order private key $SK_n$;
> u) accumulating $(n-1)_{th}$-order random public key $RaPK_{n-1}$ stored in the original chip with newly defined $R_aPK_{(USER)}$, to obtain $n_{th}$-order random public key $RaPK_n$;
> v) the user writing $SK_n$ and $RaPK_n$ into the chip, and deleting $SK_{n-1}$ and $RaPK_{n-1}$;
> w) the identity and random public key $RaPK_n$ are sent out by the user or published by the key management center.

9. The method of claim 1, wherein step 6 comprises:

> x) the encryptor or verifier using the other party's user identity and published seed public key set to calculate an identity public key IdPK of the user;
> y) adding the identity public key IdPK of the user with the random public key RaPK being sent or published, to obtain a public key PK of the user.

10. The method of claim 1, wherein the two-factor combined key is composed of identity key and random key.

11. The method of claim 10, wherein the key defined by the key management center is the first-order two-factor key; the key generated by adding the user self-defined random key on the basis of the first-order two-factor key is the second-order two-factor key; and the key generated by updating the user self-defined random key on the basis of the second-order or higher than second-order is the higher-order two-factor key.

12. The method of claim 1 or claim 11, wherein:

> the first-order public key $(PK_1)$ = IdPK+ RaPK $_{(KMC)}$ = IdPK+ $RaPK_1$, wherein $RaPK_1$ represents that the random public key is only composed of one random public key;
> the second-order public key $(PK_2)$ = IdPK+ RaPK $_{(KMC)}$+ RaPK $_{(USER)}$ = IdPK+ $RaPK_2$, wherein $RaPK_2$ represents that the random public key is constructed by adding two random public keys;
> the $n_{th}$-order public key $(PK_n)$ =IdPK+ $RaPK_n$, wherein $n \geq 3$, $RaPK_n$ represents that the random public key is constructed by adding n random public keys.

13. The method of claim 8, wherein the user is allowed to update the self-defined random public key/private key pair as desired at any time, and to generate new public key/private key pair.

14. The method of claim 13, wherein the user adds the self-defined random private key and the combined private key stored in the chip, to obtain a combined private key of this order; adds the self-defined random public key and the random public key stored in the chip, to obtain a random public key of this order; the chip includes user identity (ID), private key of this order and random public key of this order therein.

15. The method of claim 9, when using the private key $SK_1$, $SK_2$, or $SK_n$ to sign, the random public key $R_aPK_1$, $R_aPK_2$ or $R_aPK_n$ is also sent to the relying party as a part of a signature code.

**16.** The method of claim 14, wherein the user submits the random public key $R_aPK_n$ (n≥2) to the key management center, and the key management center publishes the random public key as a postfix of the entity identity, with a format as: user ID | $R_aPK_n$.

**17.** The method of claim 15 or claim 16, wherein the user self-defined random factor public key $R_aPK_{(USER)}$ is obtained from publication of the key management center or the digital signature information of the user.

**18.** The method of claim 17, when verifying the signature, the verifier first uses the published user identity and seed public key set to calculate the identity public key IdPK, adds it with the random public key $R_aPK$ published or sent by the signer, to calculate the other party's public key PK, for verifying authenticity of the signature.

**19.** When Party A transfers a session key of data encryption algorithm to party B, party A needs to obtain party B's identity ID and random public key $R_aPK$ from public resource, first using party B's identity and seed public key set to calculate party B's identity public key IdPK, adding it with party B's random public key $R_aPK$, to calculate party B's public key PK.

FIG. 1

FIG. 2

FIG. 3

FIG. 4

Generating seed
private key set

Generating seed
private key set

User registration
Management

Revocatory identity
management

Key management center

（KMC）

User private key
generation and
distribution

User private key
authentication
chip

Database

publication contents of
the system:
seed public key set
user identity
revocatory identity
  RaPK$_{(KMC)}$
  RaPK$_{(USER)}$

FIG. 5

Authentication
chip

Communication inteace

Symmetric cryptography engine

Public key cryptography engine

Safe memory area

Common memory area

true random number generator

Processor

System protection of hardware

System protection of hardware

Hardware system

true random number generating module

Elliptic curve cryptography module

Symmetriccryptographymodule

Identity-private key management module

Access control module

HASH algorithm module

Public key mapping and management module

CPK data encoding/decoding module

Communication protocol module

Software system

Seed public key

Identity-private key list

Data storage

Device management

PIN management

Digital Signature

Key exchang

File management

Writing private key

Function module

Turn on device
Turn off device

Verifying –modifying
Locking-delocking

access control
create file
read file
write file

FIG. 6

data to be signed

User selecting

| HASH algorithm module | True random number generator | Private key management module |

Data to be signed
Hash value

true random
number

Private key    Identity

Elliptic curve cryptography algorithm module

ECDSA digital signature

TF-CPK data format encoding/decoding module

TF-CPK digital signature

FIG. 7

Tag content

| RFID Unique identity | Identity signature | RFID memery |

User private key

FIG. 8

| Anti-forgery electronic tag | Tag verification | display verification result |

Seed public key set

FIG. 9

| INTERNATIONAL SEARCH REPORT | International application No. |
|---|---|
| | PCT/CN2009/000600 |

A.  CLASSIFICATION OF SUBJECT MATTER

H04L9/32(2006.01)i

According to International Patent Classification (IPC) or to both national classification and IPC

B.    FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

WPI, EPODOC, PAJ, CNPAT,CNKI: CPK, two factor, combined s key, identify+, ID, random, compound+, combin+, public key, private key

C.  DOCUMENTS CONSIDERED TO BE RELEVANT

| Category* | Citation of document, with indication, where appropriate, of the relevant passages | Relevant to claim No. |
|---|---|---|
| A | NAN Xianghao, CPK algorithm and identification authentication, Information Security and Communication Secrecy, No.9 2006, Sep. 2006（09.2006）, pages 12-16 | 1-18 |
| A | CN1832403A （BEIJING E-HENXEN AUTHENTICATION TECHNOLO 13 Sep. 2006（13.09.2006）    the whole document | 1-18 |
| A | CN1633071A （BEIJING E-HENXEN AUTHENTICATION TECHNOLO） 29 Jun. 2005（29.06.2005）    the whole document | 1-18 |
| PX | CN101340282A （BEIJING E-HENXEN AUTHENTICATION TECHNOLO） 07 Jan. 2009（07.01.2007）    the whole document | 1-18 |
| A | WO2006078561A2 （TRICIPHER INC ） 27 Jul. 2006（27.07.2006）    the whole document | 1-18 |

☐ Further documents are listed in the continuation of Box C.  ☒ See patent family annex.

| *     Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 25 Aug. 2009(25.08.2009) | **03 Sep. 2009 (03.09.2009)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer YANG Hongli Telephone No. (86-10)62411277 |

Form PCT/ISA/210 (second sheet) (April 2007)

## INTERNATIONAL SEARCH REPORT
### Information on patent family members

| | International application No. |
|---|---|
| | PCT/CN2009/000600 |

| Patent Documents referred in the Report | Publication Date | Patent Family | Publication Date |
|---|---|---|---|
| CN1832403A | 13.09.2006 | WO2007121641A1 | 01.11.2007 |
| CN1633071A | 29.06.2005 | WO2006074611A1 | 20.07.2006 |
| | | CN1262087C | 28.06.2006 |
| | | EP1843509A1 | 10.10.2007 |
| | | AU2006205987A1 | 20.07.2006 |
| | | KR20070096014A | 01.10.2007 |
| | | JP2008527866T | 24.07.2008 |
| CN101340282A | 07.01.2009 | NONE | |
| WO2006078561A2 | 27.07.2006 | US2006184786A1 | 17.08.2006 |
| | | WO2006078561A3 | 15.11.2007 |

Form PCT/ISA/210 (patent family annex) (April 2007)

## INTERNATIONAL SEARCH REPORT

International application No.

PCT/CN2009/000600

**Box No. II    Observations where certain claims were found unsearchable (Continuation of item 2 of first sheet)**

This international search report has not been established in respect of certain claims under Article 17(2)(a) for the following reasons:

1. ☐   Claims Nos.:
    because they relate to subject matter not required to be searched by this Authority, namely:

2. ☒   Claims Nos.: 19
    because it relates to parts of the international application that do not comply with the prescribed requirements to such an    extent that no meaningful international search can be carried out, specifically:
    the subject of claim 19 can not be determined, claim 19 is not clear and does not meet the requirement of PCT Article 6, and the possible claimed subject of claim 19 can not be determined.

3. ☐   Claims Nos.:
    because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

1. ☐   As all required additional search fees were timely paid by the applicant, this international search report covers all searchable claims.

2. ☐   As all searchable claims could be searched without effort justifying an additional fees, this Authority did not invite payment of any additional fee.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on protest**        ☐    The additional search fees were accompanied by the applicant's protest and, where applicable, the payment of a protest fee.

☐    The additional search fees were accompanied by the applicant's protest but the applicable protest fee was not paid within the time limit specified in the invitation.

☐    No protest accompanied the payment of additional search fees.

Form PCT/ISA/210 (continuation of first sheet (2)) (April 2007)